# EUROPÄISCHE PATENTANMELDUNG

(11) **EP 4 520 530 A1**
(43) Veröffentlichungstag der Anmeldung: **12.03.2025**
(21) Anmeldenummer: 24193113.8
(22) Anmeldetag: 06.08.2024
(51) Int. Cl.: B41C 1/05, B41N 1/06

(54) **VERFAHREN ZUM EINSTELLEN EINER LASERGRAVURANLAGE**

(30) Priorität: 29.08.2023 AT 506852023
(71) Anmelder: Oesterreichische Banknoten- und Sicherheitsdruck GmbH, 1090 Wien (AT)
(72) Erfinder: GASSNER, Thomas, 1090 Wien (AT); SAMBOLEC, Drazen, 1090 Wien (AT)
(74) Vertreter: Gibler & Poth Patentanwälte KG

(57) **Zusammenfassung**

Es ist ein Verfahren zum Einstellen einer Lasergravuranlage (1) für die Gravur eines vorgebbaren Gravurbereichs (2) einer Tiefdruckplatte (3) vorgesehen, wobei ein Laserstrahl (5) mittels einer Laseroptik (4) innerhalb eines Oberflächenbereichs (6) auf der Tiefdruckplatte (3) fokussierbar und im Wesentlichen verzerrungsfrei lenkbar ist und der vorgebbare Gravurbereich (2) innerhalb des Oberflächenbereichs (6) angeordnet ist, wobei für die Einstellung der Laseroptik (4) für eine Mehrzahl an Fokuseinstellungen jeweils wenigstens ein Gravur-Muster (7) in einem zentralen Bereich (8) des vorgebbaren Gravurbereichs (2) und wenigstens ein Gravur-Muster (7) in einem Randbereich (9) des vorgebbaren Gravurbereichs (2) erstellt wird, für jede Fokuseinstellung für jedes erstellte Gravur-Muster (7) ein Abtrag-Wert (10) ermittelt wird, für jede Fokuseinstellung ein Abweichungs-Wert aus den ermittelten Abtrag-Werten (10) ermittelt wird und bei der Laseroptik (4) die Fokuseinstellung mit dem optimalen Abweichungs-Wert eingestellt wird.

## Beschreibung

Die Erfindung betrifft ein Verfahren zum Einstellen einer Lasergravuranlage gemäß dem Oberbegriff des Patentanspruches 1.

Es sind Lasergravuranlagen zum Gravieren von Intaglio Tiefdruckplatten bekannt. Weiters ist bekannt, dass Tiefdruckplatten oftmals in Sicherheitsdruckereien verwendet werden. Aufgrund des Einsatzzweckes derartiger Druckplatten in den Sicherheitsdruckereien ist die Genauigkeit der Gravur auf der Druckplatte von großer Bedeutung.

Um eine möglichst genaue Gravur mittels eines Laserstrahls auf der Tiefdruckplatte auszubilden, wird für gewöhnlich der Fokus des Laserstrahls für einen senkrechten Einfall des Laserstrahls auf die Oberfläche der Tiefdruckplatte eingestellt, sodass die Tiefdruckplatte bei einem senkrechten Einfall des Laserstrahls im Fokus graviert wird.

Nachteilig daran ist, dass die Tiefdruckplatte lediglich auf einer kleinen Fläche genau graviert werden kann und danach die Tiefdruckplatte verschoben werden muss, um eine weitere Fläche zu gravieren. Dadurch ergeben sich vor allem bei Gravur-Mustern bzw. Designelementen, welche über diese gravierbare Fläche des Laserstrahls hinausragen, Probleme hinsichtlich der Genauigkeit im Überlappungsbereich der aufgeteilten Gravur-Muster sowie Schwierigkeiten bei der Aufteilung des zu großen Gravur-Musters in kleinere Gravur-Muster.

Aufgabe der Erfindung ist es daher ein Verfahren der eingangs genannten Art anzugeben, mit welchem die genannten Nachteile vermieden werden können, mit welchem eine Lasergravuranlage derart eingestellt werden kann, dass über einen vorgebbaren Gravurbereich einer Tiefdruckplatte ein möglichst gleichmäßiger Abtrag der Oberfläche erreicht werden kann.

Erfindungsgemäß wird dies durch die Merkmale des Patentanspruches 1 erreicht.

Dadurch ergibt sich der Vorteil, dass in dem Randbereich des Gravurbereichs ein Gravur-Muster im Wesentlichen den gleichen Abtrag-Wert aufweist, wie ein im zentralen Bereich des Gravurbereichs angefertigtes gleiches Gravur-Muster. Dadurch kann die Fläche des Gravurbereichs gegenüber herkömmlichen Lasergravuranlagen, welche für gewöhnlich den Fokus bzw. den Brennpunkt bei einem senkrechten Einfall des Laserstrahls auf die Oberfläche der Tiefdruckplatte einstellen, vergrößert werden. Durch das gegenständliche Verfahren kann die Lasergravuranlage derart eingestellt werden, dass die Tiefdruckplatte zu einem bestimmten Maß außerhalb des Brennpunkts bzw. des Fokus graviert wird, wodurch die Abtrag-Werte im zentralen Bereich und im Randbereich des Gravurbereichs annähernd gleich sind. Dadurch kann die Fläche des zu gravierenden Bereichs erhöht werden und an die von der Laseroptik vorgegebene maximal mögliche Gravurfläche angenähert werden. Dadurch können größere Designelemente leichter und schneller graviert werden und müssen nicht aufwendig in kleinere Designelemente aufgeteilt werden, wodurch auch keine Ungenauigkeiten im Überlappungsbereich der aufgeteilten Designelemente des zu erstellenden Designelements erzeugt werden.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform der Lasergravuranlage in schematischer Darstellung,
Fig. 2 eine schematische Darstellung des Verlaufs des Brennpunkts eines Laserstrahls bei unterschiedlichen Einfallswinkeln des Laserstrahls auf die Oberfläche einer Tiefdruckplatte,
Fig. 3 eine schematische Darstellung eines vorgebbaren Gravurbereichs mit mehreren Gravur-Mustern,
Fig. 4 eine weitere schematische Darstellung des vorgebbaren Gravurbereichs mit mehreren Gravur-Mustern,
Fig. 5 ein erstes Diagramm mit mehreren ermittelten Abtrag-Werten in dem vorgebbaren Gravurbereich,
Fig. 6 ein zweites Diagramm mit mehreren ermittelten Abtrag-Werten im zentralen Bereich des vorgebbaren Gravurbereichs bei unterschiedlichen Fokuseinstellungen,
Fig. 7 ein drittes Diagramm mit mehreren ermittelten Abtrag-Werten im Randbereich des vorgebbaren Gravurbereichs bei unterschiedlichen Fokuseinstellungen,
Fig. 8 ein in zwei zu gravierende Muster aufgeteiltes Designelement,
Fig. 9 das in Fig. 8 gezeigte Designelement als ein zu gravierendes Muster.

Es ist ein Verfahren zum Einstellen einer Lasergravuranlage 1 für die Gravur eines vorgebbaren Gravurbereichs 2 einer Tiefdruckplatte 3 aus einem vorgegebenen Material vorgesehen, wobei die Lasergravuranlage 1 einen Laser und eine Laseroptik 4 umfasst, wobei der Laser einen Laserstrahl 5 mit einer vorgebbaren Laserleistung erzeugt, wobei der Laserstrahl 5 mittels der Laseroptik 4 innerhalb eines Oberflächenbereichs 6 auf der Tiefdruckplatte 3 fokussierbar und im Wesentlichen verzerrungsfrei lenkbar ist, wobei der vorgebbare Gravurbereich 2 auf der Tiefdruckplatte 3 innerhalb des Oberflächenbereichs 6 auf der Tiefdruckplatte 3 angeordnet ist, wobei die Laseroptik 4 für die Gravur des vorgebbaren Gravurbereichs 2 der Tiefdruckplatte 3 gemäß den nachfolgenden Schritten eingestellt wird:
a. wobei für eine Mehrzahl an Fokuseinstellungen der Laseroptik 4 jeweils wenigstens zwei Gravur-Muster 7 in dem vorgebbaren Gravurbereich 2 gemäß eines Vorgabe-Gravur-Programms der Lasergravuranlage 1 erstellt werden,
b. wobei für jede Fokuseinstellung wenigstens ein Gravur-Muster 7 in einem zentralen Bereich 8 des vorgebbaren Gravurbereichs 2 und wenigstens ein Gravur-Muster 7 in einem Randbereich 9 des vorgebbaren Gravurbereichs 2 erstellt wird,
c. wobei für jedes erstellte Gravur-Muster 7 ein Abtrag-Wert 10 ermittelt wird,
d. wobei für jede Fokuseinstellung ein Abweichungs-Wert aus den ermittelten Abtrag-Werten 10 ermittelt wird,
e. wobei bei der Laseroptik 4 für die Gravur die Fokuseinstellung mit dem optimalen Abweichungs-Wert eingestellt wird.

Dadurch ergibt sich der Vorteil, dass in dem Randbereich 9 des Gravurbereichs 2 ein Gravur-Muster 7 im Wesentlichen den gleichen Abtrag-Wert 10 aufweist, wie ein im zentralen Bereich 8 des Gravurbereichs 2 angefertigtes gleiches Gravur-Muster 7. Dadurch kann die Fläche des Gravurbereichs 2 gegenüber herkömmlichen Lasergravuranlagen, welche für gewöhnlich den Fokus bzw. den Brennpunkt bei einem senkrechten Einfall des Laserstrahls 5 auf die Oberfläche der Tiefdruckplatte 3 einstellen, vergrößert werden. Durch das gegenständliche Verfahren kann die Lasergravuranlage 1 derart eingestellt werden, dass die Tiefdruckplatte 3 zu einem bestimmten Maß außerhalb des Brennpunkts bzw. des Fokus graviert wird, wodurch die Abtrag-Werte 10 im zentralen Bereich 8 und im Randbereich 9 des Gravurbereichs 2 annähernd gleich sind. Dadurch kann die Fläche des zu gravierenden Bereichs erhöht werden und an die von der Laseroptik 4 vorgegebene maximal mögliche Gravurfläche angenähert werden. Dadurch können größere Designelemente leichter und schneller graviert werden und müssen nicht aufwendig in kleinere Designelemente aufgeteilt werden, wodurch auch keine Ungenauigkeiten im Überlappungsbereich der aufgeteilten Designelemente des zu erstellenden Designelements erzeugt werden.

Die Lasergravuranlage 1 ist eine Anlage zum Gravieren einer Tiefdruckplatte 3, insbesondere zum Gravieren einer Intaglio Stichtiefdruckplatte. Die Lasergravuranlage 1 umfasst die zur Gravur einer Tiefdruckplatte 3 notwendigen Bauteile, welche aus dem Stand der Technik hinreichend bekannt sind. Aus diesem Grund wird nachfolgend lediglich auf die Bauteile der Lasergravuranlage 1 näher eingegangen, welche zum erfindungsgemäßen Einstellen der Lasergravuranlage 1 notwendig sind.

Es ist vorgesehen, dass die Lasergravuranlage 1 einen Laser zum Erzeugen des Laserstrahls 5 und einer Laseroptik 4 zum Fokussieren und Lenken des Laserstrahls 5 umfasst. Durch die Optik des Laserstrahls 5 bzw. der Laseroptik 4 kann der Laserstrahl 5 in dem vorgebbaren Gravurbereich 2 gelenkt werden, sodass das Gravur-Muster erzeugt werden kann. Die Laseroptik 4 hat bevorzugt einen Bereich in dem der Laserstrahl 5 im Wesentlichen verzerrungsfrei lenkbar ist. Dieser im Wesentlichen verzerrungsfreie Bereich ist von der Laseroptik 4 vorgegeben und ist der Oberflächenbereich 6. Dabei ist mit im Wesentlichen verzerrungsfrei lenkbar gemeint, dass eine Linie, welche von dem Laserstrahl 5 von einem Rand des Oberflächenbereichs 6 bis zu einem gegenüberliegenden zweiten Rand des Oberflächenbereichs 6 gezogen wird, im Wesentlichen gerade ist, also im Wesentlichen keine Verzerrungen an der Linie ausgebildet sind.

Bevorzugt kann die Lasergravuranlage 1 eine Regeleinrichtung umfassen. Bevorzugt kann die Regeleinrichtung die Lasergravuranlage 1 mittels des erfindungsgemäßen Verfahrens einstellen.

Erfindungsgemäß ist vorgesehen, dass der Laserstrahl 5 mit einer vorgebbaren Laserleistung erzeugt wird. Die Laserleistung wird dazu insbesondere bei der Lasergravuranlage 1 eingestellt. Bevorzugt wird die Laserleistung auf das vorgegebene Material der Tiefdruckplatte eingestellt, da der optimale Fokus abhängig vom Material der Tiefdruckplatte sein kann.

Bevorzugt kann die Tiefdruckplatte aus Metall, insbesondere aus der Gruppe oder einer Legierung der Gruppe: Eisen, Aluminium, Magnesium, Kupfer, Messing, Zinn, Gold, Silber, Bronze, ausgebildet sein oder umfassen.

Es ist vorgesehen, dass der vorgebbare Gravurbereich 2 auf der Tiefdruckplatte 3 angeordnet ist. Weiters ist vorgesehen, dass der vorgebbare Gravurbereich 2 innerhalb des Oberflächenbereichs 6 angeordnet ist. Der Oberflächenbereich 6 ist auf der Tiefdruckplatte 3 angeordnet.

Bevorzugt entspricht der vorgebbare Gravurbereich 2 auf der Tiefdruckplatte 3 maximal dem Oberflächenbereich 6 auf der Tiefdruckplatte 3. Bevorzugt entspricht die Fläche des vorgebbaren Gravurbereichs 2 auf der Tiefdruckplatte 3 maximal der Fläche des Oberflächenbereichs 6 auf der Tiefdruckplatte 3.

Insbesondere kann der vorgebbare Gravurbereich 2 kleiner als der Oberflächenbereich 6 sein. Dies ist beispielsweise der Fall, wenn eine kleinere Fläche als der Oberflächenbereich 6 graviert werden soll.

Erfindungsgemäß wird die Laseroptik 4 für die Gravur des vorgebbaren Gravurbereichs 2 gemäß den folgenden Schritten eingestellt.
a. wobei für eine Mehrzahl an Fokuseinstellungen der Laseroptik 4 jeweils wenigstens zwei Gravur-Muster 7 in dem vorgebbaren Gravurbereich 2 gemäß eines Vorgabe-Gravur-Programms der Lasergravuranlage 1 erstellt werden,
b. wobei für jede Fokuseinstellung wenigstens ein Gravur-Muster 7 in einem zentralen Bereich 8 des vorgebbaren Gravurbereichs 2 und wenigstens ein Gravur-Muster 7 in einem Randbereich 9 des vorgebbaren Gravurbereichs 2 erstellt wird,
c. wobei für jedes erstellte Gravur-Muster 7 ein Abtrag-Wert 10 ermittelt wird,
d. wobei für jede Fokuseinstellung ein Abweichungs-Wert aus den ermittelten Abtrag-Werten 10 ermittelt wird,
e. wobei bei der Laseroptik 4 für die Gravur die Fokuseinstellung mit dem optimalen Abweichungs-Wert eingestellt wird.

Bevorzugt ist das Gravur-Muster 7 ein vorgebbares Muster mit einem Tiefenprofil. Es ist vorgesehen, dass das Gravur-Muster 7 gemäß eines Vorgabe-Gravur-Programms der Lasergravuranlage 1 erstellt wird. Bevorzugt ist das Vorgabe-Gravur-Programm der Lasergravuranlage 1, vorzugsweise der Regeleinrichtung der Lasergravuranlage 1, vorgebbar oder in der Lasergravuranlage 1 eingespeichert. Bevorzugt hat das Gravur-Muster 7 eine vorgebbare Länge und eine vorgebbare Breite. Bevorzugt weist das Gravur-Muster einen Soll-Abtrag-Wert auf. Bevorzugt ist der Soll-Abtrag-Wert ein Wert des Abtrags der Oberfläche der Tiefdruckplatte 3, welcher Wert in Summe bei der Erzeugung bzw. Erstellung des Gravur-Musters 7 mindestens erreicht werden soll.

Bevorzugt kann dem Vorgabe-Gravur-Programm eine Zeitdauer vorgebbar sein. Beispielsweise kann die Zeitdauer mindestens 1 Minute sein, sodass insbesondere ein im zentralen Bereich 8 des vorgebbaren Gravurbereichs 2 erstelltes Gravur-Muster 7 und ein im Randbereich 9 des vorgebbaren Gravurbereichs 2 erstelltes Gravur-Muster 7 in der gleichen Zeitdauer erstellt werden.

Bevorzugt kann die vorgebbare Breite und/oder die vorgebbare Länge des Gravur-Musters mindestens 0.5 µm, insbesondere mindestens 1 µm, vorzugsweise mindestens 1.5 µm, sein.

Bevorzugt kann die maximale Tiefe des Gravur-Musters 7 mindestens 5 µm, besonders bevorzugt mindestens 10 µm, insbesondere mindestens 20 µm, sein.

Bevorzugt kann die maximale Tiefe des Gravur-Musters 7 maximal 200 µm, besonders bevorzugt maximal 150 µm, insbesondere maximal 120 µm, sein.

Bevorzugt können zur Erstellung des Gravur-Musters 7 mehrere Gravurlagen, insbesondere mindestens fünf Gravurlagen, vorzugsweise mindestens acht Gravurlagen, von der Tiefdruckplatte 3 abgetragen werden.

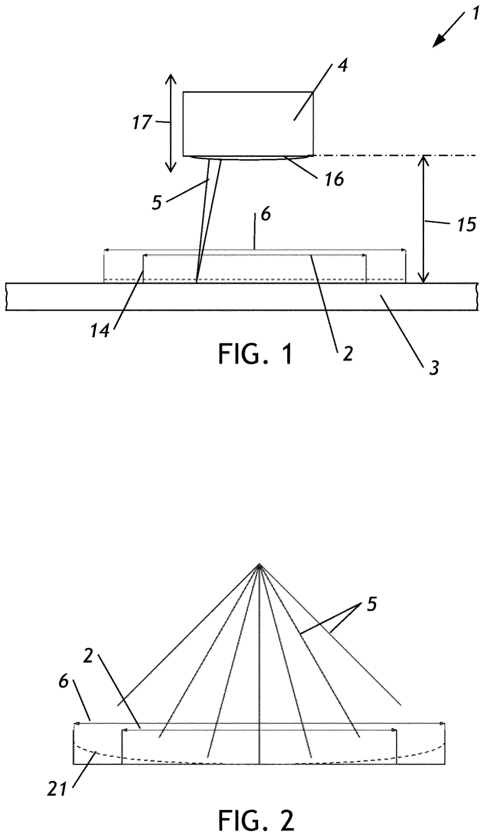

Bevorzugt kann die Fokuseinstellung mittels eines Vorgabe-Abstands 15 der Laseroptik 4 von der Oberfläche der Tiefdruckplatte 3 durchgeführt werden. Dies ist beispielhaft in Fig. 1 ersichtlich. Fig. 1 zeigt eine bevorzugte Ausführungsform der Lasergravuranlage 1 in schematischer Darstellung, wobei der Laserstrahl 5 auf die Tiefdruckplatte 3 gelenkt und ein Gravur-Muster 7 innerhalb des vorgebbaren Gravurbereichs 2 erstellt wird. Das Gravur-Muster 7 ist dabei in Fig. 1 nicht ersichtlich. Fig. 1 zeigt dabei lediglich beispielhaft das Prinzip der Einstellung mittels des Vorgabe-Abstands 15, weshalb Fig. 1 keine Abmessungen oder Proportionen entnehmbar sind. Weiters zeigt der Pfeil, auf den das Bezugszeichen 17 in Fig. 1 zeigt, beispielhaft, dass die Laseroptik 4 zur Anpassung des Vorgabe-Abstands 15 bewegt werden kann. Bevorzugt kann hierzu der Vorgabe-Abstand 15 einer Linse 16 der Laseroptik 4 von der Oberfläche der Tiefdruckplatte 3 verwendet werden, welche Linse 16 der Oberfläche der Tiefdruckplatte 3 am nächsten bzw. zugewandt ist. Dabei kann bevorzugt vorgesehen sein, dass für jeden Vorgabe-Abstand 15 wenigstens ein Gravur-Muster 7 in dem zentralen Bereich 8 des Gravurbereichs 2 und wenigstens ein Gravur-Muster 7 in dem Randbereich 9 des Gravurbereichs 2 erstellt werden, dass für jedes erstellte Gravur-Muster 7 der Abtrag-Wert 10 ermittelt wird, dass für jeden Vorgabe-Abstand 15 die Abtrag-Abweichung aus den ermittelten Abtrag-Werten 10 ermittelt wird und dass die Laseroptik 4 an den Vorgabe-Abstand 15 mit der minimalsten Abtrag-Abweichung eingestellt wird.

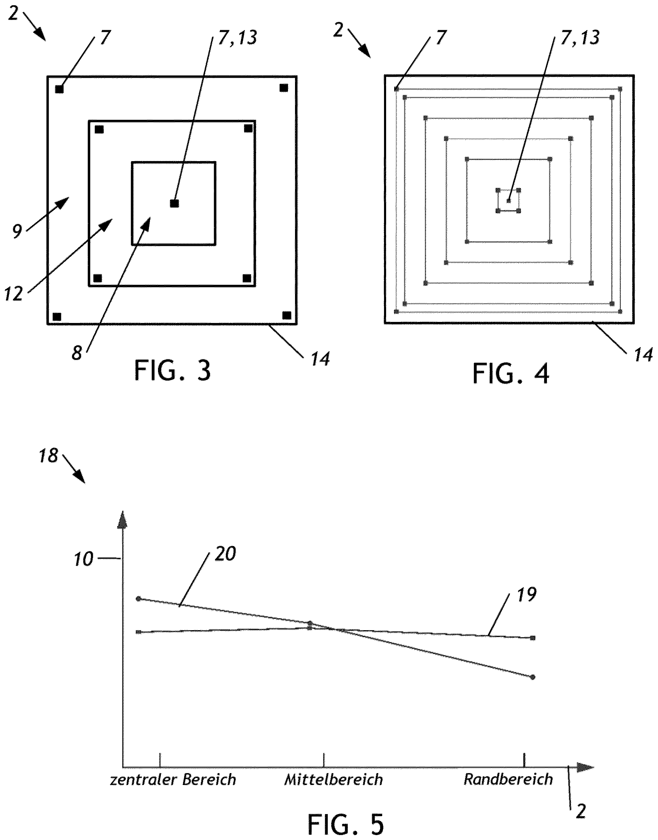

In Fig. 3 ist eine schematische Darstellung des vorgebbaren Gravurbereichs 2 mit mehreren Gravur-Mustern 7 gezeigt, wobei ein Gravur-Muster 7 im Zentrum 13 des vorgebbaren Gravurbereichs 2 und vier Gravur-Muster 7 im Randbereich 9 des vorgebbaren Gravurbereichs 2 sowie vier Gravur-Muster 7 in einem Mittelbereich 12 des vorgebbaren Gravurbereichs 2 ersichtlich sind. Weiters zeigt Fig. 3 beispielhaft, dass die Gravur-Muster 7 in dem Randbereich 9 des vorgebbaren Gravurbereichs 2 in den Ecken des vorgebbaren Gravurbereichs 2 erstellt wurden.

Bevorzugt kann der vorgebbare Gravurbereich 2 eine rechteckige oder quadratische Fläche aufweisen. Dies kann beispielsweise bei herkömmlichen Lasern vorteilhaft sein, da diese auf eine rechteckige oder quadratische Fläche einfach und genau ansteuern können.

Bevorzugt kann der vorgebbare Gravurbereich 2 eine kreisförmige Fläche aufweisen. Dies hat den Vorteil, dass bei der Erstellung von mehreren Gravur-Mustern 7 am Rand der kreisförmigen Fläche alle erstellten Gravur-Muster 7 denselben Abstand vom Zentrum des zentralen Bereichs 8 aufweisen.

Bevorzugt kann vorgesehen sein, dass für jede Fokuseinstellung wenigstens ein Gravur-Muster 7 in dem zentralen Bereich 8 des vorgebbaren Gravurbereichs 2 und wenigstens ein Gravur-Muster 7 mit einem maximalen Abstand vom Zentrum des zentralen Bereichs 8 des vorgebbaren Gravurbereichs 2 erstellt wird. Dabei kann beispielsweise das wenigstens eine Gravur-Muster 7 in einem Bereich des Randbereichs 9 erstellt werden, welcher einen möglichst großen Abstand vom Zentrum des zentralen Bereichs 8 aufweist. Dies ist beispielhaft in Fig. 3 durch die in den Ecken des vorgebbaren Gravurbereichs 2 erstellten Gravur-Muster 7 gezeigt.

Es ist vorgesehen, dass für jedes erstellte Gravur-Muster ein Abtrag-Wert 10 ermittelt wird. Bevorzugt kann der Abtrag-Wert 10 mittels einer aus dem Stand der Technik bekannten Abtrag-Messung ermittelt werden. Beispielsweise kann der Abtrag-Wert 10 mittels einer Messspitze ermittelt werden, welche Messspitze das abgetragene Profil des Gravur-Musters 7 abrastert und daraus die Tiefe und den Abtrag-Wert 10 ermittelt. Beispielsweise kann der Abtrag-Wert 10 auch mittels eines 3D-Messverfahrens, bei welchem das erzeugte Profil des Gravur-Musters 7 vermessen wird, ermittelt wird.

Bevorzugt kann der Abweichungs-Wert für jede Fokuseinstellung mittels einer vorgebbaren Abweichungs-Funktion ermittelt werden. Dabei bestimmt die Abweichungsfunktion bevorzugt das Maß für die Abweichung der Abtrag-Werte 10 zueinander.

Es ist vorgesehen, dass bei der Laseroptik 4 für die Gravur die Fokuseinstellung mit dem optimalen Abweichungs-Wert eingestellt wird. Bevorzugt ist der optimale Abweichungs-Wert der Abweichungs-Wert mit der geringsten Abweichung der jeweiligen Abtrag-Werte 10 zueinander. Dies kann insbesondere durch folgendes Beispiel besser verstanden werden: Beispielsweise wird für zehn Fokuseinstellungen jeweils ein Gravur-Muster 7 im zentralen Bereich 8 des vorgebbaren Gravurbereichs 2 und wenigstens ein Gravur-Muster 7 im Randbereich 9 des vorgebbaren Gravurbereichs 2 erstellt. Aus diesen Gravur-Mustern 7 wird für jedes Gravur-Muster 7 ein Abtrag-Wert 10 ermittelt, also zwei Abtrag-Werte 10 pro Fokuseinstellung. Hierbei kann beispielsweise bei einer Fokuseinstellung ein Abtrag-Wert 10 im zentralen Bereich 8 des Gravurbereichs 100 µm und im Randbereich 80 µm betragen und bei einer weiteren Fokuseinstellung ein Abtrag-Wert 10 im zentralen Bereich 8 des Gravurbereichs 80 µm und im Randbereich 100 µm betragen. Aus den ermittelten Abtrag-Werten 10 wird eine Abtrag-Abweichung ermittelt. Hierzu können unterschiedliche Verfahren verwendet werden, wie beispielsweise die Abweichung der Abtrag-Werte 10 von einem Mittelwert oder aber auch von einem Maximal- oder Minimalwert. Hierbei können die Abtrag-Werte 10 bevorzugt auch gewichtet werden, beispielsweise nach dem Abstand der Gravur-Muster 7 vom zentralen Bereich 8 des Gravurbereichs 2. Aus den zehn ermittelten Abweichungs-Werten wird der optimale Abweichungs-Wert ermittelt, welcher beispielsweise der minimalste oder der maximalste Abweichungs-Wert ist. Anschließend wird bei der Laseroptik 4 diese Fokuseinstellung, also die Fokuseinstellung mit dem optimalen Abweichungs-Wert eingestellt.

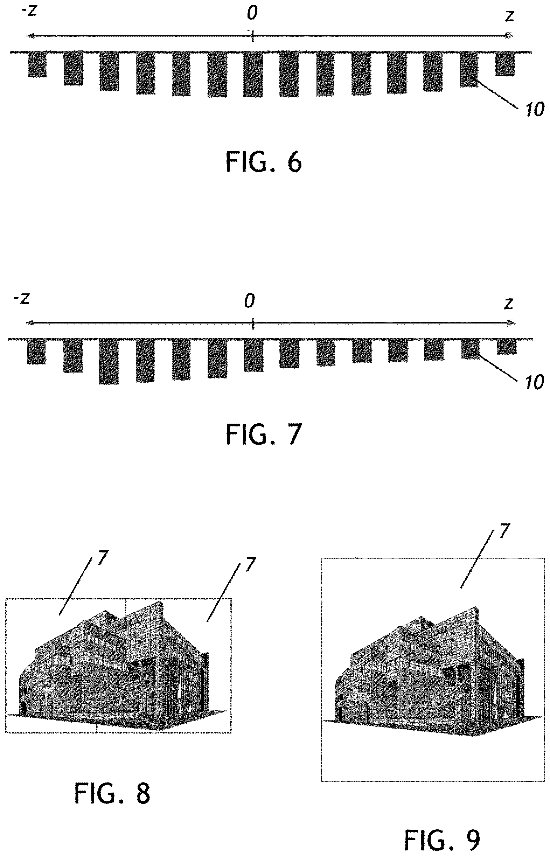

In Fig. 6 ist ein zweites Diagramm mit mehreren beispielhaft ermittelten Abtrag-Werten 10 im zentralen Bereich 8 des vorgebbaren Gravurbereichs 2 bei unterschiedlichen Fokuseinstellungen gezeigt, wobei ersichtlich ist, dass die Abtrag-Werte 10 in der Nähe der Null-Stellung der Fokuseinstellung am größten sind.

In Fig. 7 ein drittes Diagramm mit mehreren beispielhaft ermittelten Abtrag-Werten 10 im Randbereich 9 des vorgebbaren Gravurbereichs 2 bei unterschiedlichen Fokuseinstellungen gezeigt, wobei ersichtlich ist, dass die Abtrag-Werte 10 kleiner als die Null-Stellung der Fokuseinstellung am größten sind und in z-Richtung abnehmen.

Die Fig. 6 und 7 zeigen dabei beispielhaft Abtrag-Werte 10 für verschiedene Fokuseinstellungen an unterschiedlichen Bereichen in dem Gravurbereich 2, aus welchen Abtrag-Werten 10 Abweichungs-Werte und der optimale Abweichungs-Wert ermittelt werden kann.

Besonders bevorzugt kann vorgesehen sein, dass jeder Abweichungs-Wert mittels eines gemittelten Abtrag-Werts der jeweiligen Abtrag-Werte 10 ermittelt wird, und dass der optimale Abweichungs-Wert ein Extremwert der ermittelten Abweichungs-Werte ist. Dadurch kann der Abweichungs-Wert besonders einfach, beispielsweise mit Hilfe von aus der Statistik bekannten Verfahren, wie der Standardabweichung oder der Varianz, ermittelt werden.

Alternativ kann der Abweichungs-Wert aus dem quadratischen Mittel der jeweiligen Abtrag-Werte 10 ermittelt werden.

Besonders bevorzugt kann vorgesehen sein, dass für jede Fokuseinstellung der Laseroptik 4 wenigstens zwei Gravur-Muster 7, besonders bevorzugt wenigstens drei Gravur-Muster 7, insbesondere wenigstens vier Gravur-Muster 7, in dem Randbereich 9 des vorgebbaren Gravurbereichs 2 erstellt werden. Dadurch kann besonders einfach eine Gewichtung der Abtrag-Werte 10 aus den im Randbereich 9 erstellten Gravur-Mustern 7 erzeugt werden, wodurch die Lasergravuranlage 1 noch genauer eingestellt werden kann. Dadurch kann die Genauigkeit des Verfahrens verbessert werden, da die Abweichungen am Rand, bei denen der Laserstrahl 5 in einem größerem Winkel einfällt, stärker gewichtet werden können.

Bevorzugt kann vorgesehen, dass für jede Fokuseinstellung der Laseroptik 4 wenigstens zwei Gravur-Muster 7, besonders bevorzugt wenigstens drei Gravur-Muster 7, insbesondere wenigstens vier Gravur-Muster 7, mit dem maximalen Abstand vom Zentrum des zentralen Bereichs 8 des Gravurbereichs 2 erstellt werden. Dies ist beispielhaft in Fig. 3 durch die in den Ecken des Randbereichs 9 erstellten Gravur-Muster 7 ersichtlich.

Besonders bevorzugt kann vorgesehen sein, dass für jede Fokuseinstellung der Laseroptik 4 wenigstens ein Gravur-Muster 7, besonders bevorzugt wenigstens zwei Gravur-Muster 7, insbesondere wenigstens drei Gravur-Muster 7, zwischen dem zentralen Bereich 8 des vorgebbaren Gravurbereichs 2 und dem Randbereich 9 des vorgebbaren Gravurbereichs 2 erstellt werden. Dadurch kann die Lasergravuranlage 1 noch genauer eingestellt werden.

In Fig. 4 ist eine schematische Darstellung des vorgebbaren Gravurbereichs 2 mit mehreren erstellten Gravur-Mustern 7 ersichtlich. Die dünnen Linien zwischen den Gravur-Mustern 7, welche Linien die Gravur-Muster 7 miteinander verbinden, sollen zeigen, dass die jeweiligen vier Gravur-Muster mit einem gleichen Abstand vom Zentrum 13 des vorgebbaren Gravurbereichs 2 erstellt wurden. Wenn beispielsweise Abtrag-Werte 10 der Gravur-Muster 7, welche Gravur-Muster 7 von dem Zentrum 13 des Gravurbereichs 2 ausgehend entlang einer Geraden bis zu einer Ecke des Gravurbereichs 2 erstellt werden, in ein Diagramm eingetragen werden, wird ein Diagramm erhalten, wie es in Fig. 5 beispielhaft gezeigt ist. Fig. 5 zeigt dabei ein erstes Diagramm 18 mit zwei Abtrag-Kurven umfassend jeweils drei Abtrag-Werte 10. Eine erste Kurve 19 zeigt dabei im Wesentlichen gleichbleibende Abtrag-Werte 10 der erstellten Gravur-Muster 7 im zentralen Bereich 8, im Mittelbereich 12 und im Randbereich 9. Eine zweite Kurve 20 zeigt Abtrag-Werte 10 der erstellten Gravur-Muster 7 im zentralen Bereich 8, im Mittelbereich 12 und im Randbereich 9, wobei im zentralen Bereich 8 der Fokus eingestellt wurde, sodass der meiste Abtrag im zentralen Bereich 8 erreicht wird und der Abtrag im Randbereich 9 des Gravurbereichs 2 geringer wird. Dies kann beispielhaft anhand des Verlaufs der Brennpunkte 21 bei unterschiedlichen Einfallswinkeln des Laserstrahls 5 verdeutlicht werden. Dies ist beispielhaft in Fig. 2 ersichtlich, wobei der Verlauf der Brennpunkte 21 bei unterschiedliche Einstrahlwinkel des Laserstrahls 5 und einer Einstellung des Brennpunkts des Laserstrahls 5 im zentralen Bereich 8 des Gravurbereichs 2 als punktierte Linie dargestellt ist. Wie ersichtlich ist, ist der Laserstrahl 5 am Rand 14 des Gravurbereichs 2 außerhalb des Brennpunkts bzw. Fokus, weshalb in diesem Randbereich 9 auch ein geringerer Abtrag-Wert 10 als im zentralen Bereich 8 erhalten wird, so wie es in der zweiten Kurve 20 in Fig. 5 ersichtlich ist.

Bevorzugt kann zwischen dem zentralen Bereich 8 des vorgebbaren Gravurbereichs 2 und dem Randbereich 9 des vorgebbaren Gravurbereichs 2 der Mittelbereich 12 angeordnet sein.

Bevorzugt kann der vorgebbare Gravurbereich 2 lediglich den zentralen Bereich 8, den Mittelbereich 12 und den Randbereich 9 umfassen.

Besonders bevorzugt kann vorgesehen sein, dass die Fläche des zentralen Bereichs 8 wenigstens 10 Prozent, besonders bevorzugt wenigstens 20 Prozent, insbesondere wenigstens 30 Prozent der Fläche des vorgebbaren Gravurbereichs 2 entspricht. Dadurch kann ein möglichst genauer Abtrag-Wert 10 in der Nähe des Zentrums 13 des Gravurbereichs 2 erreicht werden, wodurch die Lasergravuranlage 1 sehr genau eingestellt werden kann.

Bevorzugt erstreckt sich der zentrale Bereich 8 des vorgebbaren Gravurbereichs 2 rund um das Zentrum 13 des vorgebbaren Gravurbereichs 2. Dies ist beispielhaft in Fig. 3 und Fig. 5 ersichtlich.

Bevorzugt kann vorgesehen sein, dass die Fläche des Randbereichs 9 des vorgebbaren Gravurbereichs 2 wenigstens 10 Prozent, besonders bevorzugt wenigstens 20 Prozent, insbesondere wenigstens 30 Prozent, der Fläche des vorgebbaren Gravurbereichs 2 entspricht.

Der Randbereich 9 des vorgebbaren Gravurbereichs 2 ist insbesondere der Bereich, welcher sich vom Rand 14 des Gravurbereichs 2 ausgehend Richtung Zentrum 13 des Gravurbereichs 2 erstreckt. Ein gleichmäßig vom Rand 14 des Gravurbereichs 2 weg erstreckender Randbereich 9 ist daher bevorzugt in der Form abhängig von der Form des Gravurbereichs 2. In Fig. 3 ist beispielhaft der Randbereich 9 bei einem quadratischen Gravurbereich 2 ersichtlich.

Besonders bevorzugt kann vorgesehen sein, dass sich der zentrale Bereich 8 des vorgebbaren Gravurbereichs 2 vom Zentrum 13 des vorgebbaren Gravurbereichs 2 ausgehend mindestens 10 Prozent, besonders bevorzugt mindestens 20 Prozent, insbesondere mindestens 30 Prozent, der Länge vom Zentrum 13 des vorgebbaren Gravurbereichs 2 bis zum Rand 14 des vorgebbaren Gravurbereichs 2 erstreckt. Dadurch kann der zentrale Bereich 8 je nach Größe der Fläche des Gravurbereichs 2 einfach definiert werden, wodurch die Lasergravuranlage 1 einfach an unterschiedlich große Gravurbereiche 2 eingestellt werden kann.

Bevorzugt kann vorgesehen sein, dass sich der Randbereich 9 des vorgebbaren Gravurbereichs 2 vom Rand 14 des vorgebbaren Gravurbereichs 2 ausgehend mindestens 10 Prozent, besonders bevorzugt mindestens 20 Prozent, insbesondere mindestens 30 Prozent, der Länge vom Zentrum 13 des vorgebbaren Gravurbereichs 2 bis zum Rand 14 des vorgebbaren Gravurbereichs 2 erstreckt.

Besonders bevorzugt kann vorgesehen sein, dass die Lasergravuranlage 1 die Gravur-Muster 7 auf einer im Wesentlichen ebenen Tiefdruckplatte 3 erstellt. Bevorzugt kann die Lasergravuranlage 1 hierzu einen im Wesentlichen ebenen Tisch umfassen auf dem die Tiefdruckplatte 3 angeordnet werden kann. Dadurch kann die Laseroptik 4 besonders einfach eingestellt werden und die Tiefdruckplatte 3 besonders einfach graviert werden.

Besonders bevorzugt kann vorgesehen sein, dass nachfolgend den Schritten a bis e in einem Schritt f die vorgegebene Laserleistung angepasst wird. Dadurch kann die vorgegebenen Laserleistung an den Soll-Abtrag-Wert des Gravur-Musters 7 angeglichen werden, wenn beispielsweise durch die Fokuseinstellung mit dem optimalen Abweichungs-Wert ein geringerer oder ein größerer Abtrag-Wert 10 als der gewünschte Soll-Abtrag-Wert erhalten wird.

Bevorzugt kann die vorgegebene Laserleistung in Bezug auf den Soll-Abtrag-Wert für das Gravur-Muster 7 eingestellt werden.

Besonders bevorzugt kann vorgesehen sein, dass nachfolgend dem Schritt f die Schritte a bis f erneut durchgeführt werden, bis die Abtrag-Werte 10 der Gravur-Muster 7 für die Fokuseinstellung mit dem optimalen Abweichungs-Wert in einem vorgebbaren Soll-Abtrag-Wertebereich liegen. Dies kann bevorzugt in einem Schritt g durchgeführt werden. Dadurch kann beispielsweise für einen Soll-Abtrag-Wert von 100 µm der Soll-Abtrag-Wertebereich zwischen 95 µm und 105 µm vorgegeben werden, sodass das Verfahren durchgeführt wird bis Abtrag-Werte 10 für die erstellten Gravur-Muster 7 erhalten werden, welche innerhalb dieses Soll-Abtrag-Wertebereichs liegen.

In Fig. 8 und in Fig. 9 ist beispielhaft ein Designelement für die Gravur einer Tiefdruckplatte 3 ersichtlich, wobei Fig. 8 im Gegensatz zu Fig. 9 den Fall zeigt, dass das Designelement größer als der Gravurbereich 2 ist und daher in zwei zu gravierende Muster aufgeteilt werden muss.

Bevorzugt kann das Gravur-Muster 7 auch als Kalibrier-Muster bezeichnet werden.

Bevorzugt kann nachfolgend dem Einstellen der Lasergravuranlage 1 wenigstens eine weitere Tiefdruckplatte 1 graviert werden.

Weiters kann bevorzugt ein Verfahren zum Gravieren wenigstens einer Tiefdruckplatte 3 vorgesehen sein, wobei die wenigstens eine Tiefdruckplatte 3 nach dem Einstellen der Lasergravuranlage 1, insbesondere nach dem Einstellen der Laseroptik 4 mittels der Schritte a bis e, vorzugsweise der Schritte a bis g, mit einer Gravur versehen wird. Bevorzugt kann hierzu eine erste Tiefdruckplatte 3 zum Einstellen der Lasergravuranlage 1 verwenden werden und nachfolgend dem Einstellen der Lasergravuranlage 1 wenigstens eine weitere Tiefdruckplatte 3 mit der Gravur versehen werden. Bevorzugt kann die erste Tiefdruckplatte 3, welche zum Einstellen der Lasergravuranlage 1 verwendet wird, eine spezielle Kalibrierplatte sein. Bevorzugt kann die erste Tiefdruckplatte 3 aus dem gleichen Material wie die wenigstens eine weitere Tiefdruckplatte 3 bestehen.

Bevorzugt können bei dem Verfahren zum Gravieren wenigstens einer Tiefdruckplatte 3 mehrere gleichartige Tiefdruckplatten 3 vorgesehen sein, wobei mittels einer ersten Tiefdruckplatte 3 der mehreren gleichartigen Tiefdruckplatten 3 die Lasergravuranlage 1 für die Gravur der weiteren der mehreren gleichartigen Tiefdruckplatten 3 eingestellt wird. Bevorzugt bestehen die mehreren gleichartigen Tiefdruckplatten 3 aus dem gleichen Material. Bevorzugt weisen die mehreren gleichartigen Tiefdruckplatten 3 die gleichen Materialeigenschaften auf. Bevorzugt werden die weiteren der mehreren gleichartigen Tiefdruckplatten 3 mit einer Gravur bzw. mit einem zu gravierenden Muster versehen. Dieses zu gravierende Muster kann bevorzugt auch als Designelement bezeichnet werden. In Fig. 8 und 9 ist beispielhaft ein Designelement ersichtlich. Dabei kann sich das zu gravierende Muster von dem Gravur-Muster 7 unterscheiden, wobei das Gravur-Muster 7 ein spezielles Muster zur Einstellung der Lasergravuranlage 1 ist und das zu gravierende Muster ein Muster ist, welches nach der Gravur der Tiefdruckplatte 3 für den Tiefdruck mit der gravierten Tiefdruckplatte 3 verwendet wird.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Verfahren zum Einstellen einer Lasergravuranlage (1) für die Gravur eines vorgebbaren Gravurbereichs (2) einer Tiefdruckplatte (3) aus einem vorgegebenen Material, wobei die Lasergravuranlage (1) einen Laser und eine Laseroptik (4) umfasst, wobei der Laser einen Laserstrahl (5) mit einer vorgebbaren Laserleistung erzeugt, wobei der Laserstrahl (5) mittels der Laseroptik (4) innerhalb eines Oberflächenbereichs (6) auf der Tiefdruckplatte (3) fokussierbar und im Wesentlichen verzerrungsfrei lenkbar ist, wobei der vorgebbare Gravurbereich (2) auf der Tiefdruckplatte (3) innerhalb des Oberflächenbereichs (6) auf der Tiefdruckplatte (3) angeordnet ist, wobei die Laseroptik (4) für die Gravur des vorgebbaren Gravurbereichs (2) der Tiefdruckplatte (3) gemäß den nachfolgenden Schritten eingestellt wird:
a. wobei für eine Mehrzahl an Fokuseinstellungen der Laseroptik (4) jeweils wenigstens zwei Gravur-Muster (7) in dem vorgebbaren Gravurbereich (2) gemäß eines Vorgabe-Gravur-Programms der Lasergravuranlage (1) erstellt werden,
b. wobei für jede Fokuseinstellung wenigstens ein Gravur-Muster (7) in einem zentralen Bereich (8) des vorgebbaren Gravurbereichs (2) und wenigstens ein Gravur-Muster (7) in einem Randbereich (9) des vorgebbaren Gravurbereichs (2) erstellt wird,
c. wobei für jedes erstellte Gravur-Muster (7) ein Abtrag-Wert (10) ermittelt wird,
d. wobei für jede Fokuseinstellung ein Abweichungs-Wert aus den ermittelten Abtrag-Werten (10) ermittelt wird,
e. wobei bei der Laseroptik (4) für die Gravur die Fokuseinstellung mit dem optimalen Abweichungs-Wert eingestellt wird.

2. Verfahren nach Anspruch 1, **dadurch gekennzeichnet, dass** jeder Abweichungs-Wert mittels eines gemittelten Abtrag-Werts der jeweiligen Abtrag-Werte (10) ermittelt wird, und dass der optimale Abweichungs-Wert ein Extremwert der ermittelten Abweichungs-Werte ist.

3. Verfahren nach Anspruch 1 oder 2, **dadurch gekennzeichnet, dass** für jede Fokuseinstellung der Laseroptik (4) wenigstens zwei Gravur-Muster (7), besonders bevorzugt wenigstens drei Gravur-Muster (7), insbesondere wenigstens vier Gravur-Muster (7), in dem Randbereich (9) des vorgebbaren Gravurbereichs (2) erstellt werden.

4. Verfahren nach einem der Ansprüche 1 bis 3, **dadurch gekennzeichnet, dass** für jede Fokuseinstellung der Laseroptik (4) wenigstens ein Gravur-Muster (7), besonders bevorzugt wenigstens zwei Gravur-Muster (7), insbesondere wenigstens drei Gravur-Muster (7), zwischen dem zentralen Bereich (8) des vorgebbaren Gravurbereichs (2) und dem Randbereich (9) des vorgebbaren Gravurbereichs (2) erstellt werden.

5. Verfahren nach einem der Ansprüche 1 bis 4, **dadurch gekennzeichnet, dass** die Fläche des zentralen Bereichs (8) wenigstens 10 Prozent, besonders bevorzugt wenigstens 20 Prozent, insbesondere wenigstens 30 Prozent der Fläche des vorgebbaren Gravurbereichs (2) entspricht.

6. Verfahren nach einem der Ansprüche 1 bis 5, **dadurch gekennzeichnet, dass** sich der zentrale Bereich (8) des vorgebbaren Gravurbereichs (2) vom Zentrum (13) des vorgebbaren Gravurbereichs (2) ausgehend mindestens 10 Prozent, besonders bevorzugt mindestens 20 Prozent, insbesondere mindestens 30 Prozent, der Länge vom Zentrum (13) des vorgebbaren Gravurbereichs (2) bis zum Rand (14) des vorgebbaren Gravurbereichs (2) erstreckt.

7. Verfahren nach einem der Ansprüche 1 bis 6, **dadurch gekennzeichnet, dass** die Lasergravuranlage (1) die Gravur-Muster (7) auf einer im Wesentlichen ebenen Tiefdruckplatte (3) erstellt.

8. Verfahren nach einem der Ansprüche 1 bis 7, **dadurch gekennzeichnet, dass** nachfolgend den Schritten a bis e in einem Schritt f die vorgegebene Laserleistung angepasst wird.

9. Verfahren nach Anspruch 8, **dadurch gekennzeichnet, dass** nachfolgend dem Schritt f die Schritte a bis f erneut durchgeführt werden, bis die Abtrag-Werte (10) der Gravur-Muster (7) für die Fokuseinstellung mit dem optimalen Abweichungs-Wert in einem vorgebbaren Soll-Abtrag-Wertebereich liegen.
